# EUROPEAN PATENT SPECIFICATION

(11) **EP 2 560 331 B1**
(45) Date of publication and mention of the grant of the patent: **26.03.2014**
(21) Application number: 12192568.9
(22) Date of filing: 28.12.2006
(51) Int. Cl.: H04L 29/06, H04W 12/06, H04W 88/16, H04L 12/66, H04W 8/26, H04W 74/00, H04W 76/02, H04W 88/08

(54) **Method, apparatus and system of radio access**
Verfahren, Vorrichtung und System zum Funkzugriff
Procédé, appareil et système d'accès radio

(30) Priority: 28.12.2005 CN 200510121507
(43) Date of publication of application: 20.02.2013
(62) Divisional of application: 06840683.4
(73) Proprietor: Huawei Technologies Co., Ltd., Longgang District, Shenzhen Guangdong 518129 (CN)
(72) Inventor: Qian, Tao, Shenzhen Guangdong 518129 (CN); Ye, Xiaolong, Shenzhen Guangdong 518129 (CN); Zhu, Wei, Shenzhen Guangdong 518129 (CN); He, Chaohua, Shenzhen Guangdong 518129 (CN); Hu, Bo, Shenzhen Guangdong 518129 (CN)
(74) Representative: Isarpatent

(56) References cited:
- "3RD GENERATION PARTNERSHIP PROJECT; TECHNICAL SPECIFICATION GROUP SERVICES AND SYSTEM ASPECTS; 3GPP SYSTEM TO WIRELESS LOCAL AREA NETWORK (WLAN) INTERWORKING; SYSTEM DESCRIPTION (RELEASE 6)", 20031101, vol. 3-SA, no. V230, 1 November 2003 (2003-11-01), pages 1-99, XP009053812,
- JEE-YOUNG SONG ET AL: "Hybrid coupling scheme for UMTS and wireless LAN interworking", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 4, 6 October 2003 (2003-10-06), pages 2247-2251, XP010702141, DOI: DOI:10.1109/VETECF.2003.1285929 ISBN: 978-0-7803-7954-1
- BUDDHIKOT M M ET AL: "Integration of wireless LAN and 3G wireless - Design and implementation of a wlan/cdma2000 interworking architecture", IEEE COMMUNICATIONS MAGAZINE, IEEE SERVICE CENTER, PISCATAWAY, US, vol. 41, no. 11, 1 November 2003 (2003-11-01), pages 90-100, XP011103280, ISSN: 0163-6804, DOI: DOI:10.1109/MCOM.2003.1244928
- SALKINTZIS A K: "INTERWORKING TECHNIQUES AND ARCHITECTURES FOR WLAN/3G INTEGRATION TOWARD 4G MOBILE DATA NETWORKS", IEEE WIRELESS COMMUNICATIONS, IEEE SERVICE CENTER, PISCATAWAY, NJ, US, vol. 11, no. 3, 1 June 2004 (2004-06-01), pages 50-61, XP001217417, ISSN: 1536-1284, DOI: DOI:10.1109/MWC.2004.1308950
- RAJAVELSAMY R ET AL: "Performance evaluation of VoIP over 3G-WLAN interworking system", WIRELESS COMMUNICATIONS AND NETWORKING CONFERENCE, 2005 IEEE NEW ORLEANS, LA, USA 13-17 MARCH 2005, PISCATAWAY, NJ, USA,IEEE, vol. 4, 13 March 2005 (2005-03-13), pages 2312-2317, XP010791538, DOI: DOI:10.1109/WCNC.2005.1424876 ISBN: 978-0-7803-8966-3

## Description

### Field of the Technology

The present invention relates to radio communication field, and particularly, to a method, apparatus and system of radio access.

### Background of the Invention

With the development of Internet services and the wide application of broadband access networks and radio networks, fast and convenient network access techniques are concerned widely. Meanwhile, researches on accessing multiple network services simultaneously are becoming a highlight in the communication industry so as to utilize existing network resources and to protect the costs of network service providers more effectively.

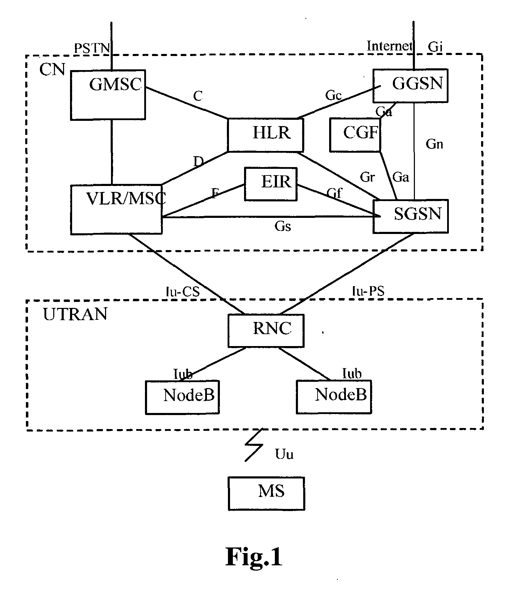

Fig.1 shows a simplified schematic diagram illustrating the networking of a conventional Universal Mobile Telecommunication System (UMTS) network. As shown in Fig.1, the UMTS network is composed of a Core Network (CN) and a UMTS Terrestrial Radio Access Network (UTRAN). The CN includes a circuit domain and a packet switch domain. The circuit domain includes a Mobile Switch Center (MSC)/Visiting Location Register (VLR) and a Home Location Register (HLR), and the packet switch domain includes a Serving General Packet Radio Service (GPRS) Support Node (SGSN) and a Gateway GPRS Support Node (GGSN). The UTRAN includes more than one Radio Network Subsystem (RNS), and an RNS is composed of one Radio Network Controller and more than one Node B. The interface between the UTRAN and the circuit domain of the CN is an Iu interface for a Circuit Switch (CS), which is so called an Iu-CS interface; the interface between the UTRAN and the packet switch domain of the CN is an Iu interface for a Packet Switch (PS), which is so called an Iu-PS interface. Based on the networking of the UMTS network as shown in Fig.1, it is possible for a Mobile Station (MS) to access the Public Switched Telephone Network (PSTN) through the CS, and to access a PS network (i.e. the Internet) through the PS.

With respect to networking architecture and network functions, a GPRS network, a CDMA2000 network and a Time Division-Synchronous Code Division Multiple Access (TD-SCDMA) network are almost the same as the UMTS network, and differ from the UMTS network in the processing of physical layer protocols at the radio access side.

In the networking architecture adopting the foregoing various radio access techniques, there is a packet switch domain node, e.g., a GGSN, which is located at the mutual border of a mobile communication network which is provided by service providers and an external PS network, the GGSN is used to implement the convergence and forwarding of data streams between the MS and the PS network.

In the related art, the network node implementing the convergence and forwarding of data flows, e.g., a GGSN providing access for the MS, can only access a limited number of MSs because of the restriction on the amount of the converged data flows. In other words, due to the restriction on the amount of the converged data flows, the larger the number of the MSs allowed to access the GGSN is, the smaller bandwidth allocated to each of the MSs is.

"3rd Generation Partnership Project; Technical specification Group Services and System Aspects; §GPP System to Wireless local Area Network (WLAN) Interworking; System description (release 6)" vol 3-SA, no. V230, November 1, 2003 discloses a solution for WLAN Radio networks interworking with 3GPP.

Jee-Young Soung et al: "Hybrid coupling scheme for UMTS and wireless LAN interworking", vehicular technology conference 2003. VTC 2003-FALL. 2003 IEEE 58th Orlando, FL, USA 6-9 Oct. 2003, vol 4, pages 2247 - 2251 (ISBN:978-0-7803-7954-1) discloses a Hybrid Coupling Scheme for UMTS and Wireless LAN Interworking.

### Summary of the Invention

Embodiments of the present invention provides a radio access gateway, a radio access point, a radio access network composed of the radio access gateway and the radio access point. The scope of protection is given by the appended claims.

A method of radio access includes:
receiving, by a radio access point, an access request containing a service type of the service requested by a Mobile Station, MS;
sending, by the radio access point, the service type in the access request to a radio access gateway;
if the service type requested is a Packet Switch, PS, service in a PS network in particular Internet, the PS service different to a mobile packet service accessed through a mobile packet network, the radio access gateway managing the radio access point to allow the MS to directly access the PS network different to the mobile packet network in particular Internet through the radio access point by following manner: the radio access point performing route selecting according to destination address of the service and establishing a direct connection to the PS network different to the mobile packet network in particular Internet;
wherein the method further comprising:
   establishing, by the radio access gateway, a communication connection between the MS and a packet switch domain gateway in a mobile packet network if the service type requested is a mobile packet service; wherein the MS accesses the mobile packet service through the packet switch domain gateway; or
   establishing, by the radio access gateway, a communication connection between the MS and a switch center if the service type requested is a Circuit Domain, CS service; wherein the MS accesses the circuit domain service through the switch center.

A radio access point includes:
a module configured to receive an access request containing a service type of the service requested by a Mobile Station, MS;
a module configured to send the service type in the access request to a radio access gateway;
a module configured to perform route selecting according to destination address of the service and establish a direct connection to a Packet Switch, PS, network different to a mobile packet network in particular Internet under management of the radio access gateway so as to allow the MS to directly access the PS network in particular Internet through the radio access point, if the service type requested is a PS service in the PS network different to the mobile packet network in particular Internet, the PS service different to a mobile packet service accessed through a mobile packet network;
wherein the radio access gateway is capable of:
   establishing a communication connection between the MS and a packet switch domain gateway in a mobile packet network if the service type requested is a mobile packet service; wherein the MS accesses the mobile packet service through the packet switch domain gateway; or
   establishing a communication connection between the MS and a switch center if the service type requested is a Circuit Domain, CS service; wherein the MS accesses the circuit domain service through the switch center.

A radio access network includes: a radio access gateway and at least one radio access point as above.

In the technical solutions according to the embodiments of the present invention, only through the radio access point, the MS may be directly connected to the PS network and perform the transmission of PS services, and the radio access gateway manages the radio access point and controls the data transmission of the radio access point. According to the embodiments of the present invention, the forwarding capacity of PS services of a single subscriber is improved, convergence of data flows at the border of the mobile network is avoided, and thus the burden on the access controller and the network border devices (e.g., a GGSN) is lightened. Additionally, the architecture of a network for forwarding PS services is simplified, and thus the processing delay of the network is reduced and the forwarding performance is improved.

### Brief Description of the Drawings

Fig.1 shows a simplified schematic diagram illustrating the networking of a conventional UMTS network.
Fig.2 shows a simplified schematic diagram illustrating the architecture of a radio access network in accordance with an embodiment of the present invention.
Fig.3 shows a simplified flow chart of implementing the radio access of an MS in accordance with an embodiment of the present invention.
Fig.4 shows a simplified schematic diagram illustrating the signaling interaction of a radio access gateway authenticating a radio access point in accordance with an embodiment of the present invention.
Fig.5 shows a simplified flow chart of a radio access gateway authenticating a radio access point in accordance with an embodiment of the present invention.
Fig.6 shows a simplified schematic diagram illustrating the networking architecture of a PS network combining with a UMTS network in accordance with an embodiment of the present invention.
Fig.7 shows a simplified schematic diagram illustrating the networking architecture of a PS network combining with a GPRS network in accordance with an embodiment of the present invention,
Fig.8 shows a simplified schematic diagram illustrating the networking architecture of a PS network combining with a CDMA2000 network in accordance with an embodiment of the present invention.
Fig.9 shows a simplified flow chart of accessing a data network through a radio access point in accordance with an embodiment of the present invention.
Fig.10 shows a simplified schematic diagram illustrating the signaling interaction of an MS accessing a mobile PS service in the coverage of a radio access point in accordance with an embodiment of the present invention.
Fig. 11 shows a simplified schematic diagram illustrating the signaling interaction of an MS accessing a PS network in the coverage of a radio access point in accordance with an embodiment of the present invention.

### Embodiments of the Invention

The embodiments of the present invention are hereinafter described in detail with reference to the accompanying drawings.

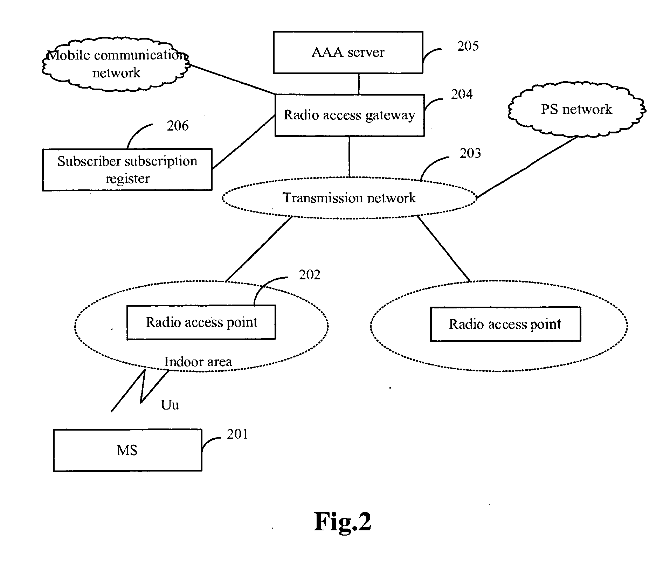

An embodiment of the present invention provides a radio access network as shown in Fig.2. MS 201 may be a conventional MS, the mobile communication network may be a conventional mobile communication network and the PS network may also be a conventional PS network. The radio access network in this embodiment of the present invention includes a radio Access Gateway (AG) 204, at least one radio Access Point (AP) 202 and a subscriber subscription register 206. The radio access network may also include an Authentication, Authorization and Accounting (AAA) server 205, which is connected to the AG 204 directly or connected to the AG 204 through the mobile communication network, the AAA server is used for authorizing and authenticating an MS.

The AG 204 is connected to one or more APs 202 through a transmission network 203, and manages and controls the one or more APs 202. The transmission network 203 may be an x Digital Subscriber Line (xDSL) network, an IP over Ethernet network, an IP over ATM network, or a Worldwide Interoperability Microwave Access (WiMAX) network. The differences between these transmission networks will not influence the functions of the AG 204 and the AP 202 as the AG 204 and the AP 202 are adapted for different transmission networks. Transmission network 203 is connected to the PS network through a gateway device in the transmission network 203.

The subscriber subscription register 206 is used for storing access control information, location information and authentication information of the MS. Subscriber subscription register 206 may include a Home Location Register (HLR), an Authentication Center (AuC) and an Equipment Identity Register (EIR). The subscriber subscription register 206 does not transfer communication services but transfers service storage addresses and identity information for PS services. Practically, in different applications, the subscriber subscription register 206 may also store circuit domain service information related to voice services. The HLR stores permanent subscriber data, that is, the subscriber data may be stored in the HLR all along. The AuC is a database for generating an authentication vector. In general, the HLR and the AuC are combined and authenticate the MS together. The EIR stores identity information related to the hardware of the MS.

The AG 204 mainly provides data transmission functions of the Packet switch domain which include:
network access control, including: connecting the MS to a communication network so as to enable the MS to use network services, and such functions as authentication, authorization, admittance and packet filtering, wherein the access control of the MS may be performed at the mobile side or the fixed side of the network, and includes some specific procedures, e.g., limiting the number of mobile subscribers and the access ability of a single mobile subscriber;
packet routing and forwarding control, including: functions of the control plane in a radio access gateway, and specifically, the establishing, modifying and releasing of a forwarding path, which include address translation and mapping, encapsulating, and tunnelling, wherein the forwarding path is composed of a source node and a destination node, and a transferring node may be included;
mobility management, including: managing the address information and the location information of the MS in the mobile communication network;
radio access point management, including: performing the authentication and register management of the radio access point;
charging management, including: managing charging policies, collecting and reporting charging information, and providing charging interface for the MS;
network management, including: providing functions related to the Operation and Management (OAM) of the transmission network.

Based on the foregoing functions, a radio access gateway provided by the embodiments of the present invention includes: a network access control module, a packet routing and forwarding control module, a voice forwarding and management module, a mobility management module, a radio access point management module, a charging management module and a network management module.

The network access control module is used for establishing a communication link between the MS and the network layer; the packet routing and forwarding control module is used for establishing, modifying and releasing a packet forwarding path; the voice forwarding and management module is used for encapsulating and forwarding a voice packet between MS 201 and the circuit domain of the mobile communication network; the mobility management module is used for managing location information of the MS in the mobile network; the radio access point management module is used for performing the authentication and register management of the radio access point; the charging management module is used for managing charging policies, collecting and reporting charging information, and providing charging interface for the MS; the network management module is used for providing functions related to the OAM of the transmission network.

The AG 204 manages the MS 201 to perform the transmission of PS services in the mobile communication network.

Furthermore, the AG 204 may also provide some standard interfaces, e.g., Ga, Gb, Gd, Ge, Gf, Gn (for control plane), Gr and Gs. The AG 204 and other network elements in the mobile communication network may be interconnected through these standard interfaces.

The AP 202 provides functions as follows:
radio access control function including: establishing and releasing a radio link, and the admittance control of a radio interface, and packet scheduling of a radio interface;
packet routing and forwarding function, including: encapsulating and forwarding a PS service;
radio resource management function, including: allocating, recycling and maintaining radio resources, and specifically, switching management, power control, access control, packet scheduling and so on;
voice encoding and decoding function, including: the format conversion of a voice packet between a radio interface and an interface of the network layer;
network management function, including: providing the OMA functions of the transmission network.

To implement the above-mentioned functions, the AP 202 in accordance with an embodiment of the present invention at least includes a radio access control module, a packet routing and forwarding module, and a radio resource management module.

The radio access control module is used for establishing or releasing a radio link according to an access request from the MS, and performing the admittance control for the access of the MS; the packet routing and forwarding module is used for encapsulating and forwarding a PS service; the radio resource management module is used for allocating, recycling and maintaining radio resources.

The AP 202 also includes a voice encoding and decoding module, which is used for performing the format conversion of a voice packet between a radio interface and an interface of the network layer, and dealing with some real-time strictly required services in circuit domain.

The AP 202 may also provide Gi and Gn interfaces for the subscriber plane so as to support the seamless access of a conventional MS. Then the applicability of devices may be improved.

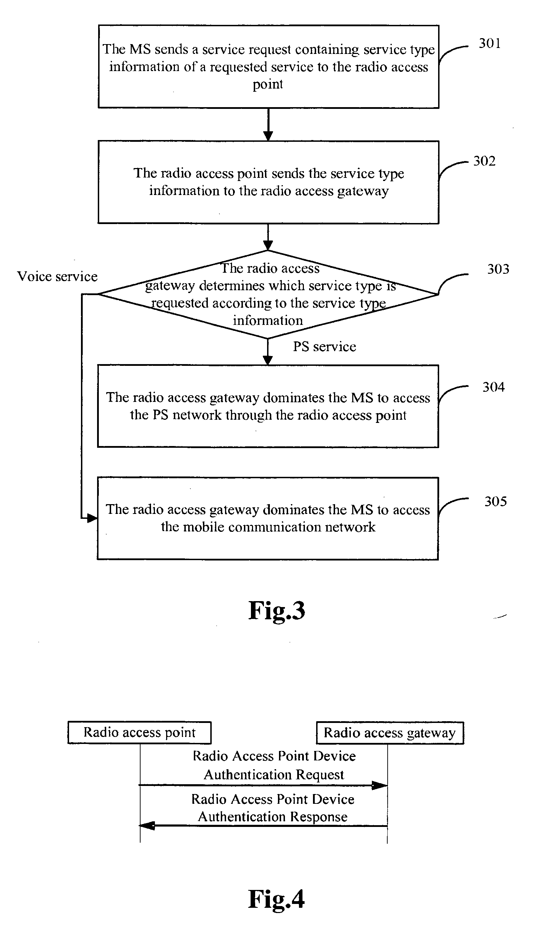

As shown in Fig.3, the procedure of implementing the radio access of an MS adopting the above radio access network includes steps as follow.

Step 301: The MS sends a service transmission request containing service type information to the radio access point.

Step 302: The radio access point sends the service type information to a radio access gateway.

Step 303: The radio access gateway determines which service type is requested by the MS according to the service type information; if a PS service is requested, proceed to Step 304; if a CS service is requested, i.e., a voice service, proceed to Step 305.

Step 304: The radio access gateway dominates the MS directly to access the PS network through the radio access point, and then this procedure terminates.

Step 305: The radio access gateway dominates the MS to access the mobile communication network.

The radio access point needs to be authenticated before accessing the radio access gateway so as to guarantee the validity of the MS accessing the radio access point. A device authentication method based on a device serial number and key is provided herein by the embodiments of the present invention.

The device serial number is used for identifying the radio access point exclusively and is generally stored in the radio access point in advance when the radio access point is manufactured. The key corresponds to the device serial number one-to-one, and may be stored in the radio access point after being encrypted. The device serial number of the radio access point and the key corresponding to the device serial number are also stored in a database of the radio access gateway.

The authentication process of the radio access point is shown in Fig.4. The information elements carried in an authentication request message of the radio access point (i.e. Access Point Device Auth Request) include: transaction Identity (ID), device serial number, the result of Hash <key + transaction ID + device serial number>. The transaction ID is used for identifying the authentication request message exclusively and is generated by the radio access point. The transaction ID is suggested to be acquired randomly in the embodiments of the present invention. The device serial number is acquired from the memory media of the radio access point. A secure Hash algorithm SHA-1 may be used and the foregoing key + transaction ID + device serial number are input parameters of the Hash algorithm. The Hash algorithm in the radio access point should be consistent with Hash algorithm in the radio access gateway.

The information elements carried in an authentication response message of the radio access point (i.e. Access Point Device Auth Response) include: transaction ID, authentication result, the result of the Hash <key + transaction ID + authentication result>. The transaction ID is acquired from the authentication request message of the radio access point. The result of the Hash algorithm may be optional in the authentication response message.

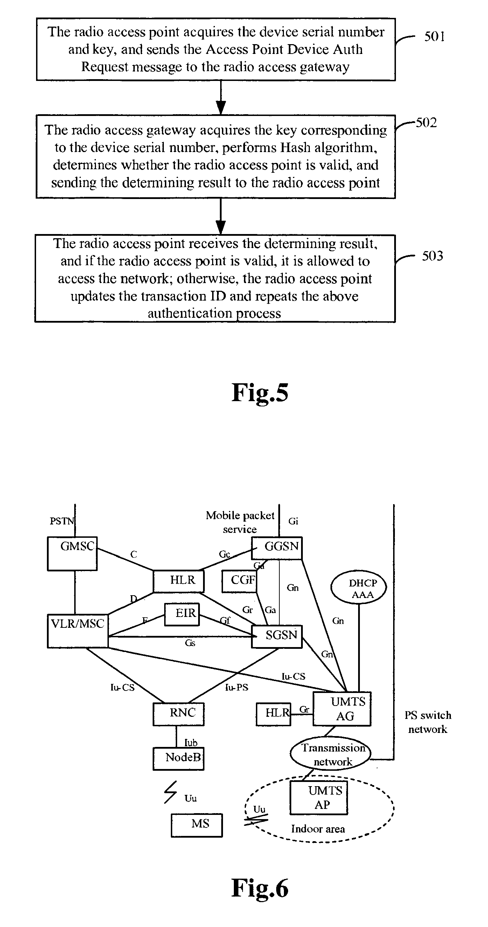

The process of the radio access gateway authenticating the radio access point is shown in Fig.5 and includes the steps as follows.

Step 501: The radio access point acquires the device serial number and key from its memory media, generates an Access Point Device Auth Request message and sends the Access Point Device Auth Request message to the radio access gateway to which the radio access point belongs to.

Step 502: The radio access gateway acquires the key corresponding to the device serial number in the Access Point Device Auth Request message received. The radio access gateway performs a Hash algorithm, compares the result of the Hash algorithm with the result of the Hash algorithm in the Access Point Device Auth Request message, so as to determine whether the radio access point is valid. And then the radio access gateway sends the authentication result to the radio access point.

As receiving the Access Point Device Auth Request message, the radio access gateway acquires the key corresponding to the device serial number in the Access Point Device Auth Request message from the database, performs the Hash algorithm <key + transaction ID + device serial number>, compares the result of the Hash algorithm with the result of the Hash algorithm in the Access Point Device Auth Request message, if the two results are consistent with each other, the radio access point is deemed to be valid, otherwise, the radio access point is deemed to be invalid. The radio access gateway generates an Access Point Device Auth Response message according to the authentication result and sends the Access Point Device Auth Response message to the corresponding radio access point.

Step 503: As receiving the Access Point Device Auth Response message, the radio access point determines whether the authentication result is valid, if the authentication result is valid, the radio access point is allowed to access the network; otherwise, the radio access point updates the transaction ID, re-generates an Access Point Device Authentication Request message and repeats the above authentication process.

In the above authentication process of the radio access point, the key may be a symmetric key or an asymmetric key. The Hash algorithm may be SHA-1 or other algorithms, such as the MD5. In the case that the asymmetric key is used, the radio access point has a Private Key while the radio access gateway has a Public Key. The detailed process is similar to the above mentioned and will not be described herein.

When the MS sends an access request to the radio access point, the radio access point authenticates the MS with the assistance of the radio access gateway and implements the access of the MS to the network through signalling interaction. The radio access gateway manages radio resources. When transferring a PS service, the MS may perform the data transmission of the PS service through the radio access point and the PS network. Compared with the data transmission in conventional networks, e.g., the GPRS network, the above data transmission method makes network architecture simpler, reduces the transmission delay of subscriber services, improves forwarding performance and extends the bandwidth of air interfaces.

Based on the above radio access solutions, an embodiment of the present invention provides a network architecture, in which the foregoing radio access network is combined with a conventional 3G network. Thus not only circuit domain services (i.e. voice services), but also PS services may be dealt with efficiently. The embodiment is hereinafter described in detail by means of an example in which the radio access network is combined with a UMTS network.

As shown in Fig.6, the conventional UMTS network is combined with the above radio access network. The radio access gateway is connected to the VLR/MSC, SGSN and GGSN in the UMTS network; in addition, the radio access gateway may share with the UMTS network the same subscriber subscription register, e.g., the HLR in the UMTS network.

The radio access gateway provides such interfaces as an Iu-CS interface, Gn interface, Gr interface, and Ga interface, and thus the seamless connection between the radio access gateway and the conventional mobile communication network is guaranteed. The radio access gateway is connected to the VLR/MSC through the Iu-CS interface, and the communication connection of the MS may be transferred to the MSC in the circuit domain through the Iu-CS interface when the MS accesses the network through the radio access point. Thus, the functions of the circuit domain are implemented. The radio access gateway is also connected to the SGSN and GGSN in the packet switch domain through the Gn interface, and the communication connection of the MS may be transferred to the GGSN through the Gn interface provided by the radio access gateway. So the MS may perform PS service transmission through the GGSN or communicate with other networks connected to the UMTS network through the GGSN when the MS accesses the network through the radio access point. When the communication connection of the MS is transferred from the radio access network to the 3G network, the radio access gateway performs the transfer through the SGSN.

In this network, the radio access gateway may query for location information and subscription information of the MS accessing the network through the radio access point according to the subscriber subscription information stored in the HLR in the UMTS network. Then the radio access gateway may determine a service type requested by the MS, verify whether the subscriber has subscribed to the service corresponding to the service type, and perform the subsequent processing according to the determining result. When the subscriber requests for a voice service, the radio access gateway transfers the service request of the subscriber to the VLR/MSC in the UMTS network. This circuit domain service (the voice service) is performed by the VLR/MSC. When the subscriber performs PS service transmission, the radio access point performs route selecting according to the destination address of the service requested by the subscriber, establishes a connection to the PS network, performs the PS service transmission directly. Thus, the conventional mobile communication network may be used when the subscriber transfers a circuit domain service; when the subscriber transfers a packet switch domain service, the subscriber may directly access the PS network through the radio access point, so as to decrease transfer process of data and to reduce the processing delay of the network. The radio access gateway may be an independent network node, or be integrated into the SGSN as an additional function module.

The radio access network provided by the embodiments of the present invention may share network devices (i.e. an AAA device) with the conventional UMTS network by providing some public interfaces.

In the embodiments of the present invention, the messages borne by the interface between the radio access point and the radio access gateway are divided into messages of the user plane and messages of the signaling plane. The user plane distinguishes a CS message and a PS message by different port numbers of the User Datagram Protocol (UDP), while the signaling plane distinguishes CS signaling or PS signaling by different flow identities (IDs) in the association of the Signaling Control Transmission Protocol (SCTP). An uplink signaling message of the MS carries a CS ID or a PS ID, the radio access point selects a flow ID corresponding to the association of the SCTP according to the CS ID or the PS ID. The radio access gateway may determine whether the uplink signaling message is sent to the CS domain or the PS domain according to the flow ID. Downlink signaling messages are distributed to links corresponding to different flow IDs. For uplink user plane data of the MS, the radio access point determines whether the data belongs to the CS domain or the PS domain according to the Radio Bearer (RB), and selects a UDP port number to send the data to the radio access gateway; the radio access gateway determines whether the data belong to the CS domain or the PS domain according to the UDP port number. Downlink user plane data is distributed to the Radio Bearers corresponding to different UDP ports.

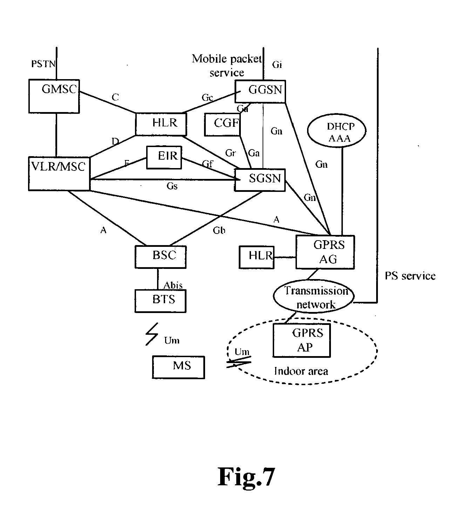

Fig.7 shows a simplified schematic diagram illustrating the networking architecture of a radio access network combining with a conventional GPRS network, in which the connection manner is similar to that in the UMTS network. The difference includes: the MS accesses the radio access point through an air interface Um. The structures of the radio access gateway and the radio access point need not to be modified and may meet the demands of the GPRS network if the adaptation layer is adjusted.

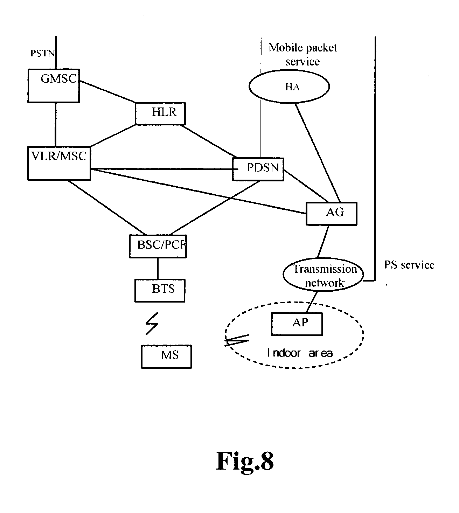

Fig.8 shows a simplified schematic diagram illustrating the architecture of the PS service transmission network combining with a conventional CDMA2000 network. The radio access gateway is connected to the VLR/MSC, the Packet Data Service Node (PSDN) and the Home Agent (HA) in the conventional CDMA2000 network. The specific procedure is analogous to that of the UMTS network and will not be described herein.

The radio access network may also be connected to a conventional TD-SCDMA network.

An embodiment of the present invention also provide a method of radio access: a radio access gateway is connected to a radio access point through a transmission network, a MS performs PS service transmission with a PS network through the radio access point after accessing the network. The transmission network may be an xDSL network, an IP over Ethernet network, an IP over ATM network or a WiMAX network. The radio access gateway authenticates the radio access point. The detailed authentication method may refer to as authentication manner mentioned above.

The radio access gateway may be connected to a gateway in the packet switch domain of a conventional mobile communication network, and thus, the MS may communicate, through the gateway in the packet switch domain, with other networks connected to the conventional mobile communication network. The gateway in the packet switch domain may be a GGSN or a PDSN.

In addition, the radio access gateway may be connected to a switch center in the conventional mobile communication network, and thus the MS may be connected to a Public Switched Telephone Network through the switch center so as to implement service transmission of the circuit domain.

The PS service gateway is a GGSN and the switch center is a Mobile Switch Center in a UMTS network; the PS service gateway is a GGSN and the switch center is a Mobile Switch Center in a GPRS network; the PS service gateway is a PS serving node and the switch center is a Mobile Switch Center in a CDMA2000 network; the PS service gateway is a GGSN and the switch center is a Mobile Switch Center in a TD-SCDMA network.

The radio access gateway manages the radio access point so as to control the radio access and data transmission of the MS.

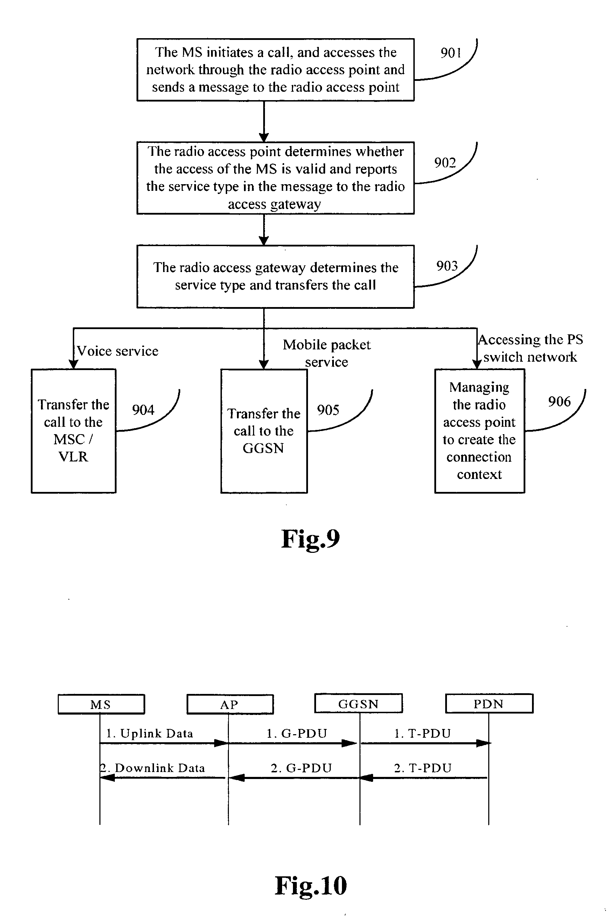

According to the above method, the procedure of a MS accessing a data network through a radio access point is shown in Fig.9 and includes the steps as follows.

Step 901: The MS initiates a call and sends a message with the service type of a requested service to the radio access point.

The requested service may be a voice service, a mobile packet service or a PS service, and the PS service is provided by a mobile service provider or the partner of the mobile service provider.

Step 902: The radio access point determines whether the access of the MS is valid and reports the service type in the message sent by the MS to the radio access gateway.

Step 903: The radio access gateway transfers the call to a corresponding function entity based on the service type requested by the MS.

Proceed to Step 904 if the requested service is a voice service; proceed to Step 905 if the requested service is a mobile packet service; and proceed to Step 906 if the requested service is a PS service in a PS network.

Step 904: The radio access gateway transfers the call to the MSC/VLR and the MSC performs the related processing in the circuit domain.

Step 905: The radio access gateway performs route selecting, determines a GGSN to which the called party belongs according to the address of the called party, and controls the radio access point to establish the connection with the destination GGSN.

As shown in Fig.10, the radio access point establishes the connection with the GGSN. Specifically, the radio access point sends a Transfer Protocol Data Unit (T-PDU) to the GGSN. The GGSN encapsulates and deals with the T-PDU to generate a TPU with a GPRS tunneling protocol (GTP) header (G-PDU), and send the G-PDU to the destination of the call so as to establish the connection with the mobile packet network. The mobile packet network sends the T-PDU to the radio access point through the GGSN, the radio access point sends the PS service to the MS, and thus, the access to the mobile packet service is implemented.

Step 906: The radio access gateway manages the radio access point to allow the MS to directly access the PS network through the radio access point.

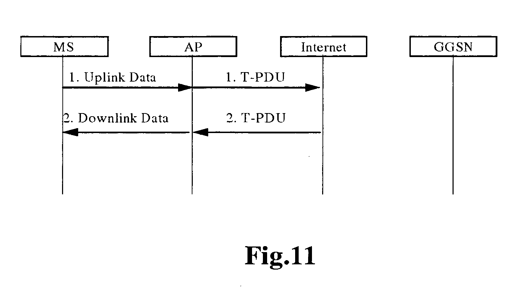

As shown in Fig.11, the radio access point sends the T-PDU to the PDSN directly without the GGSN. The PDN sends the PS service to the radio access point, the radio access point forwards the PS service to the MS, and thus the access to the PS network is implemented.

With the above method, the MS may implement high speed PS service transmission. Specifically, the MS may directly access the PS network through the radio access point without convergence and forwarding of a device at the network side, and thus the bandwidth of data transmission is increased and the processing delay of the network is reduced. Moreover, the subscriber may also implement voice services to be interconnected with other networks.

In the embodiments of the present invention, the capacity of PS service forwarding of a single subscriber is improved, convergence of traffic at the access controller and the border of the mobile network is avoided, and thus the burden on the access controller and the network border devices is lightened. In addition, in the radio access network provided by the embodiments of the present invention, the processing delay of networks is reduced, the bandwidth of air interfaces is increased, the forwarding performance is improved, and thus the service experience of the subscriber is improved.

It should be noted that the foregoing is only preferred embodiments of the present invention and is not for use in limiting the protection scope thereof.

## Claims

1. A method of radio access, **characterized by** comprising:
receiving (301), by a radio access point (202), an access request containing a service type of the service requested by a Mobile Station, MS (201);
sending (302), by the radio access point (202), the service type in the access request to a radio access gateway (204);
if the service type requested is a Packet Switch, PS, service in a PS network in particular Internet, the PS service different to a mobile packet service accessed through a mobile packet network, the radio access gateway (204) managing the radio access point (202) to allow the MS (201) to directly access the PS network different to the mobile packet network in particular Internet through the radio access point (202) by following manner: the radio access point (202) performing route selecting according to destination address of the service and establishing a direct connection to the PS network different to the mobile packet network in particular Internet;
wherein the method further comprising:
establishing, by the radio access gateway (204), a communication connection between the MS (201) and a packet switch domain gateway in a mobile packet network if the service type requested is a mobile packet service; wherein the MS (201) accesses the mobile packet service through the packet switch domain gateway; or
establishing, by the radio access gateway (204), a communication connection between the MS (201) and a switch center if the service type requested is a Circuit Domain, CS service; wherein the MS (201) accesses the circuit domain service through the switch center.

2. The method of claim 1, further comprising:
authenticating, by the radio access gateway (204), the radio access point (202).

3. The method of claim 1 or 2, further comprising:
determining, by the radio access point (202), whether the access of the MS (201) is valid.

4. A radio access point (202), **characterized by** comprising:
a module configured to receive an access request containing a service type of the service requested by a Mobile Station, MS;
a module configured to send the service type in the access request to a radio access gateway (204);
a module configured to perform route selecting according to destination address of the service and establish a direct connection to a Packet Switch, PS, network different to a mobile packet network in particular Internet under management of the radio access gateway. (204) so as to allow the MS (201) to directly access the PS network in particular Internet through the radio access point (202), if the service type requested is a PS service in the PS network different to the mobile packet network in particular Internet, the PS service different to a mobile packet service accessed through a mobile packet network;
wherein the radio access gateway (204) is capable of:
establishing a communication connection between the MS (201) and a packet switch domain gateway in a mobile packet network if the service type requested is a mobile packet service; wherein the MS (201) accesses the mobile packet service through the packet switch domain gateway; or
establishing a communication connection between the MS (201) and a switch center if the service type requested is a Circuit Domain, CS service; wherein the MS (201) accesses the circuit domain service through the switch center.

5. The radio access point of claim 4, further comprising:
a module configured to determine whether the access of the MS is valid.

6. A radio access network, **characterized in that**, comprising: a radio access gateway (204) and at least one radio access point (202) according to any of claims 4 to 5.

7. The radio access network of claim 6, further comprising:
a subscriber subscription register, capable of storing subscriber subscription information, access control information, location information and authentication information of the MS (201); wherein
the subscriber subscription register is connected to the radio access gateway (204) directly or through a signaling transmission point;
the radio access gateway (204) is further capable of querying for the subscriber subscription information according to the access request, and authenticating the MS (201), and managing the MS (201) to establish a connection to the PS network through the radio access point (202) if the MS (201) is authenticated successfully.

8. The radio access network of claim 6, wherein the radio access gateway (204) is further capable of determining the service according to the access request, and connecting the MS (201) to a circuit domain of a mobile communication network if the service is a voice service.

9. The radio access network of claim 6, further comprising: an Authentication, Authorization and Accounting, AAA, server (205) connected to the radio access gateway (204), capable of authenticating and authorizing the MS (201).

10. The radio access network of claim 6, wherein the radio access gateway (204) is connected to a packet switch domain gateway in a mobile communication network; the MS (201) is capable of accessing a mobile packet service through the packet switch domain gateway; or
the radio access gateway (204) is connected to a switch center in a mobile communication network; the MS (201) is capable of connecting to a Public Switched Telephone Network (PSTN) through the switch center.

## Patentansprüche

1. Verfahren für einen Funkzugriff, **dadurch gekennzeichnet, dass** es Folgendes umfasst:
Empfangen (301) durch einen Funkzugriffspunkt (202) einer Zugriffsanforderung, die einen Diensttyp des angeforderten Diensts enthält, von einer Mobilstation, MS, (201);
Senden (302) durch den Funkzugriffspunkt (202) des Diensttyps in der Zugriffsanforderung zu einem Funkzugriffs-Gateway (204);
falls der angeforderte Diensttyp ein Paketvermittlungsdienst, PS-Dienst, in einem PS-Netz, insbesondere Internet, ist, wobei der PS-Dienst von einem Mobilpaketdienst, auf den über ein Mobilpaketnetz zugegriffen wird, verschieden ist, Managen des Funkzugriffspunkts (202) durch das Funkzugriffs-Gateway (204), um der MS (201) zu erlauben, direkt auf das von dem Mobilpaketnetz verschiedene PS-Netz, insbesondere Internet, über den Funkzugriffspunkt (202) auf die folgende Weise zuzugreifen: durch den Funkzugriffspunkt (202) Ausführen einer Wegewahl in Übereinstimmung mit einer Zieladresse des Diensts und Aufbauen einer direkten Verbindung mit dem von dem Mobilpaketnetz verschiedenen PS-Netz, insbesondere Internet;
wobei das Verfahren ferner Folgendes umfasst:
Aufbauen durch das Funkzugriffs-Gateway (204) einer Kommunikationsverbindung zwischen der MS (201) und einem Paketvermittlungsdomänen-Gateway in einem Mobilpaketnetz, falls der angeforderte Diensttyp ein Mobilpaketdienst ist; wobei die MS (201) auf den Mobilpaketdienst über das Paketvermittlungsdomänen-Gateway zugreift; oder
Aufbauen durch das Funkzugriffs-Gateway (204) einer Kommunikationsverbindung zwischen der MS (201) und einer Vermittlungszentrale, falls der angeforderte Diensttyp ein Schaltungsdomänen-Dienst, CS-Dienst, ist; wobei die MS (201) auf den Schaltungsdomänendienst über die Vermittlungszentrale zugreift.

2. Verfahren nach Anspruch 1, das ferner Folgendes umfasst:
Authentifizieren durch das Funkzugriffs-Gateway (204) des Funkzugriffspunkts (202).

3. Verfahren nach Anspruch 1 oder 2, das ferner Folgendes umfasst:
Bestimmen durch den Funkzugriffspunkt (202), ob der Zugriff der MS (201) gültig ist.

4. Funkzugriffspunkt (202), **dadurch gekennzeichnet, dass** er Folgendes umfasst:
ein Modul, das konfiguriert ist, eine Zugriffsanforderung, die einen Diensttyp des angeforderten Diensts enthält, von einer Mobilstation, MS, zu empfangen;
ein Modul, das konfiguriert ist, den Diensttyp in der Zugriffsanforderung zu einem Funkzugriffs-Gateway (204) zu senden;
ein Modul, das konfiguriert ist, unter dem Management des Funkzugriffs-Gateways (204) eine Wegewahl in Übereinstimmung mit einer Zieladresse des Diensts auszuführen und eine direkte Verbindung mit einem von einem Mobilpaketnetz verschiedenen Paketvermittlungsnetz, PS-Netz, insbesondere Internet, aufzubauen, um so der MS (201) zu erlauben, direkt auf das PS-Netz, insbesondere Internet, über den Funkzugriffspunkt (202) zuzugreifen, falls der angeforderte Diensttyp ein PS-Dienst in dem von dem Mobilpaketnetz verschiedenen PS-Netz, insbesondere Internet, ist, wobei auf den von einem Mobilpaketdienst verschiedenen PS-Dienst über ein Mobilpaketnetz zugegriffen wird;
wobei das Funkzugriffs-Gateway (204) in der Lage ist:
eine Kommunikationsverbindung zwischen der MS (201) und einem Paketvermittlungsdomänen-Gateway in einem Mobilpaketnetz aufzubauen, falls der angeforderte Diensttyp ein Mobilpaketdienst ist; wobei die MS (201) auf den Mobilpaketdienst über das Paketvermittlungsdomänen-Gateway zugreift; oder
eine Kommunikationsverbindung zwischen der MS (201) und einer Vermittlungszentrale aufzubauen, falls der angeforderte Diensttyp ein Schaltungsdomänendienst, CS-Dienst, ist; wobei die MS (201) auf den Schaltungsdomänendienst über die Vermittlungszentrale zugreift.

5. Funkzugriffspunkt nach Anspruch 4, der ferner Folgendes umfasst:
ein Modul, das konfiguriert ist, zu bestimmen, ob der Zugriff der MS gültig ist.

6. Funkzugriffsnetz, **dadurch gekennzeichnet, dass** es Folgendes umfasst: ein Funkzugriffs-Gateway (204) und wenigstens einen Funkzugriffspunkt (202) nach einem der Ansprüche 4 bis 5.

7. Funkzugriffsnetz nach Anspruch 6, das ferner umfasst:
ein Teilnehmerbeitragsregister, das Teilnehmerbeitragsinformationen, Zugriffssteuerinformationen, Ortsinformationen und Authentifizierungsinformationen der MS (201) speichern kann; wobei das Teilnehmerbeitragsregister mit dem Funkzugriffs-Gateway (204) direkt oder über einen Signalgebungs-Sendepunkt verbunden ist;
wobei das Funkzugriffs-Gateway (204) ferner die Teilnehmerbeitragsinformationen in Übereinstimmung mit der Zugriffsanforderung abfragen kann und die MS (201) authentifizieren kann und die MS (201) managen kann, um eine Verbindung mit dem PS-Netz über den Funkzugriffspunkt (202) aufzubauen, falls die MS (201) erfolgreich authentifiziert wird.

8. Funkzugriffsnetz nach Anspruch 6, wobei das Funkzugriffs-Gateway (204) ferner in der Lage ist, den Dienst in Übereinstimmung mit der Dienstanforderung zu bestimmen und die MS (201) mit einer Schaltungsdomäne eines Mobilkommunikationsnetzes zu verbinden, falls der Dienst ein Sprachdienst ist.

9. Funkzugriffsnetz nach Anspruch 6, das ferner Folgendes umfasst: einen Authentifizierungs-, Autorisierungs- und Abrechnungs-Server, AAA-Server, (205), der mit dem Funkzugriffs-Gateway (204) verbunden ist und die MS (201) authentifizieren und autorisieren kann.

10. Funkzugriffsnetz nach Anspruch 6, wobei das Funkzugriffs-Gateway (204) mit einem Paketvermittlungsdomänen-Gateway in einem Mobilkommunikationsnetz verbunden ist; wobei die MS (201) auf einen Mobilpaketdienst über das Paketvermittlungsdomänen-Gateway zugreifen kann; oder
das Funkzugriffs-Gateway (204) mit einer Vermittlungszentrale in einem Mobilkommunikationsnetz verbunden ist; wobei die MS (201) mit einem öffentlichen Telephonvermittlungsnetz (PSTN) über die Vermittlungszentrale verbinden kann.

## Revendications

1. Procédé d'accès radio, **caractérisé en ce qu'**il comprend les étapes suivantes :
recevoir (301), par un point d'accès radio (202), une demande d'accès contenant un type de service du service demandé par une station mobile, MS (201) ;
envoyer (302), par le point d'accès radio (202), le type de service mentionné dans la demande d'accès à une passerelle d'accès radio (204) ;
si le type de service demandé est un service à commutation de paquets, PS, dans un réseau PS, en particulier Internet, le service PS différent d'un service à commutation paquets mobile accédé par l'intermédiaire d'un réseau à commutation de paquets mobile, la passerelle d'accès radio (204) gérant le point d'accès radio (202) pour permettre à la MS (201) d'accéder directement au réseau PS différent du réseau à commutation de paquets mobile, en particulier Internet, par l'intermédiaire du point d'accès radio (202) de la manière suivante : le point d'accès radio (202) exécute une sélection de route conformément à une adresse de destination du service et établit une connexion directe au réseau PS différente du réseau à commutation de paquets mobile, en particulier Internet ;
où le procédé comprend en outre les étapes suivantes :
établir, par la passerelle d'accès radio (204), une connexion de communication entre la MS (201) et une passerelle de domaine à commutation de paquets dans un réseau à commutation de paquets mobile si le type de service demandé est un service à commutation de paquets mobile ; où la MS (201) accède au service à commutation de paquets mobile par l'intermédiaire de la passerelle de domaine à commutation de paquets ; ou
établir, par la passerelle d'accès radio (204), une connexion de communication entre la MS (201) et un centre de commutation si le type de service demandé est un service de domaine de circuit, CS ; où la MS (201) accède au service de domaine de circuit par l'intermédiaire du centre de commutation.

2. Procédé selon la revendication 1, comprenant en outre l'étape suivante :
authentifier, par la passerelle d'accès radio (204), le point d'accès radio (202).

3. Procédé selon la revendication 1 ou la revendication 2, comprenant en outre l'étape suivante :
déterminer, par le point d'accès radio (202), si l'accès de la MS (201) est valide.

4. Point d'accès radio (202), **caractérisé en ce qu'**il comprend :
un module configuré pour recevoir une demande d'accès contenant un type de service du service demandé par une station mobile, MS ;
un module configuré pour envoyer le type de service dans la demande d'accès à une passerelle d'accès radio (204) ;
un module configuré pour exécuter une sélection de route conformément à une adresse de destination du service et établir une connexion directe à un réseau à commutation de paquets, PS, différent d'un réseau à commutation de paquets mobile, en particulier Internet, sous la gestion de la passerelle d'accès radio (204) de manière à autoriser la MS (201) à accéder directement au réseau PS, en particulier Internet, par l'intermédiaire du point d'accès radio (202), si le type de service demandé est un service PS dans le réseau PS, différent du réseau à commutation de paquets mobile, en particulier Internet, le service PS différent du service à commutation de paquets mobile accédé par l'intermédiaire d'un réseau à commutation de paquets mobile ;
où la passerelle d'accès radio (204) est capable d'exécuter les étapes suivantes :
établir une connexion de communication entre la MS (201) et une passerelle de domaine à commutation de paquets dans un réseau à commutation de paquets mobile, si le type de service demandé est un service à commutation de paquets mobile ; où la MS (201) accède au service à commutation de paquets mobile par l'intermédiaire de la passerelle de domaine à commutation de paquets ; ou
établir une connexion de communication entre la MS (201) et un centre de commutation si le type de service demandé est un service de domaine de circuit, CS ;
où la MS (201) accède au service de domaine de circuit par l'intermédiaire du centre de commutation.

5. Point d'accès radio selon la revendication 4, comprenant en outre :
un module configuré pour déterminer si l'accès de la MS est valide.

6. Réseau d'accès radio, **caractérisé en ce qu'**il comprend : une passerelle d'accès radio (204) et au moins un point d'accès radio (202) conformément à l'une quelconque des revendications 4 et 5.

7. Réseau d'accès radio selon la revendication 6, comprenant en outre :
un registre d'abonnement d'abonné, capable de stocker des informations d'abonnement d'abonné, des informations de contrôle d'accès, des informations de localisation et des informations d'authentification de la MS (201) ; où le registre d'abonnement d'abonné est connecté à la passerelle d'accès radio (204) directement ou par l'intermédiaire d'un point de transmission de signalisation ;
la passerelle d'accès radio (204) est en outre capable de demander des informations d'abonnement d'abonné conformément à la demande d'accès, et d'authentifier la MS (201), et de gérer la MS (201) pour établir une connexion au réseau PS par l'intermédiaire du point d'accès radio (202) si la MS (201) est authentifiée avec succès.

8. Réseau d'accès radio selon la revendication 6, dans lequel la passerelle d'accès radio (204) est en outre capable de déterminer le service conformément à la demande d'accès, et de connecter la MS (201) à un domaine de circuit d'un réseau de communication mobile si le service est un service vocal.

9. Réseau d'accès radio selon la revendication 6, comprenant en outre : un serveur d'authentification, d'autorisation et de comptabilité (205), AAA, connecté à la passerelle d'accès radio (204), capable d'authentifier et d'autoriser la MS (201).

10. Réseau d'accès radio selon la revendication 6, dans lequel la passerelle d'accès radio (204) est connectée à une passerelle de domaine à commutation de paquets dans un réseau de communication mobile ;
la MS (201) est capable d'accéder à un service à commutation de paquets mobile par l'intermédiaire de la passerelle de domaine à commutation de paquets ; ou
la passerelle d'accès radio (204) est connectée à un centre de commutation dans un réseau de communication mobile ; la MS (201) est capable de se connecter à un réseau téléphonique public commuté (PSTN) par l'intermédiaire du centre de commutation.
